# EUROPEAN PATENT APPLICATION

(11) **EP 2 881 902 A1**
(43) Date of publication of application: **10.06.2015**
(21) Application number: 13290334.5
(22) Date of filing: 09.12.2013
(51) Int. Cl.: G06Q 10/02, G06Q 30/06

(54) **Generation of offers with limited time frame guaranteed availability and pricing for travel itineraries**

(71) Applicant: Amadeus S.A.S., 06410 Biot (FR)
(72) Inventor: Yalcin, Isin, 06250 Mougins (FR); Donadio, Jean Noel, 06410 Biot (FR); Verdet, Victor, 06600 Antibes (FR); Deram, Pauline, 06560 Valbonne (FR)
(74) Representative: Samson & Partner Patentanwälte mbB

(57) **Abstract**

A method, apparatus and program product generate a set of guaranteed offers that are guaranteed to a traveler in terms of both availability and price for a limited period of time. The guaranteed offers may be grouped together into a set such that booking probabilities may be assigned to travel services associated with the guaranteed offers and an overbooking factor for at least one travel service may be determined based upon the assigned booking probabilities. By doing so, travelers may be provided with a guarantee of price and availability prior to booking, while inventory and/or revenue management for a travel provider may be managed in a more accurate manner that accounts for the provisional status of the guaranteed offers, and the likelihood that only one, or potentially, none of the guaranteed offers will ultimately be accepted by the traveler.

## Description

### Field of the invention

Embodiments of the invention relate generally to computers and computer software, and more specifically, to the use of same in the travel industry.

### Background of the invention

Computer technology is increasingly used by travelers to make traveling less difficult and more efficient. Automated booking systems, for example, enable travelers to view prices and schedules for passenger vehicles such as airplanes, buses, trains, subways, ferries, cruise ships, etc., as well as purchase tickets for such vehicles when a suitable match Is found. Flight and public transportation status systems are available to track delays in scheduled flights, buses, subways and passenger trains, often enabling travelers to view in real-time where a passenger vehicle is current located and when it will arrive at its intended destination. In addition, for road travel by car, traffic information is often available in real time to enable travelers to identify delays on certain routes, and in many cases, to change their planned routes in order to avoid delays.

Concurrent with the improvements in computer technology is an increasing reliance on mobile devices such as smart phones by travelers. Many travel-related tools that were once limited to access via computers, e.g., via web sites, are now optimized for access via a mobile device, whether by mobile device optimized web sites or web-based applications, or via dedicated mobile applications.

Despite these improvements in travel-related computer technology, challenges still remain for many travelers. In particular, travelers are still often at risk of encountering unplanned travel incidents such as delays and other travel-related problems that may necessitate changes to their itineraries, and such changes are often stressful and problematic for the travelers, not to mention the travel providers and agents that the travelers rely upon to schedule and otherwise handle their itineraries.

For example, when a traveler knows that he or she is going to miss a flight, or when the traveler has already missed a flight, the traveler will often need to contact a travel agency or airline to rebook a different flight to a destination. Additionally, the traveler may need to consider all of the other elements and travel services in the itinerary (e.g., hotels, rental cars, parking, etc.) that may be impacted by any changes, and make appropriate arrangements to obtain any necessary extensions, updates or cancellations. For example, after missing a flight, a traveler taking the next flight to the same destination will typically arrive later, and potentially after a car rental office is closed or after a pre-booked taxi was scheduled. Even a hotel room reservation may expire due to the extended delay. Furthermore, if a traveler is required to take a flight to a different city and stay overnight before flying to their original destination, any hotel room reservation in the original destination may need to be canceled and a new hotel room reservation booked in the other city.

The update of these various impacted elements is often complicated, time consuming, irritating and stressful for a traveler, and a travel may encounter numerous problems when addressing these elements. For example, a traveler may encounter difficulties attempting to rebook new flights, hotels or cars by phone, and may be subject to high international calling costs if he or she is traveling outside of his or her country of origin. A traveler may also be in a different time zone from their agent or travel provider, or attempting to contact the agent or travel provider during non-working hours or on the weekend. A traveler may also be a non-native speaker who is not fluent in a local language. In addition, searching and rebooking new flights, hotels, cars, etc., is often time consuming, even with the advances in online travel services, and a traveler may not have sufficient time to change their itinerary, e.g., If on a business trip and busy with meetings and other obligations.

In addition, in some instances the need to rebook travel services in a dynamic environment In which pricing and/or availability are in a state of constant flux can add additional stress to a traveler. Possible changes to an itinerary that are initially located by a traveler may no longer be available, or may be more expensive, when the traveler is finally able to confirm those changes. Considering that a traveler may also be forced to deal with other Issues related to an unplanned travel incident, the additional stress associated with rebooking under such circumstances is often unwelcome.

Therefore, a substantial need exists for a manner of facilitating the rebooking of travel services and itineraries in response to delays and other types of incidents that might impact a traveler's itinerary.

### Summary of the Invention

The invention addresses these and other problems associated with the prior art by providing in one aspect a method, apparatus and program product that generate a set of guaranteed offers that are guaranteed to a traveler in terms of both availability and price for a limited period of time. In addition, as the guaranteed offers are grouped together into a set, booking probabilities may be assigned to travel services associated with the guaranteed offers such that an overbooking factor for at least one travel service may be determined based upon the assigned booking probabilities. By doing so, travelers may be provided with a guarantee of price and availability prior to booking, while inventory and/or revenue management for a travel provider may be managed in a more accurate manner that accounts for the provisional status of the guaranteed offers, and the likelihood that only one, or potentially, none of the guaranteed offers will ultimately be accepted by the traveler.

Therefore, consistent with one aspect of the invention a set of guaranteed offers may be generated for a requested journey between an origin and a destination, where each guaranteed offer includes a travel itinerary and guarantees availability and price for the travel itinerary for a limited period of time, booking probabilities to travel services associated with the set of guaranteed offers may be assigned, and an overbooking factor for at least one travel service associated with at least one of the plurality of guaranteed offers may be determined based upon the assigned booking probabilities.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there are described example embodiments of the invention.

### Brief Description of the Drawings

FIGURE 1 is a block diagram of a computer system configured to implement an auto rebook service consistent with the invention.
FIGURE 2 is a block diagram of an example implementation of a computer system capable of Implementing the auto rebook system of Fig. 1.
FIGURE 3 is a flowchart illustrating an example sequence of operations for a detect travel incidents routine executed by the auto rebook system of Fig. 1.
FIGURE 4 is a flowchart illustrating an example sequence of operations for a cascading impact analysis routine executed by the auto rebook system of Fig. 1.
FIGURE 5 is a flowchart illustrating an example sequence of operations for a generate proposals routine executed by the auto rebook system of Fig. 1.
FIGURE 6 is a flowchart illustrating an example sequence of operations for a travel reorganization routine executed by the auto rebook system of Fig. 1.
FIGURE 7 is a flowchart illustrating an example sequence of operations for a guaranteed offer generation routine capable of being executed by the computer system of Fig. 1.

### Detailed Description

Embodiments consistent with one aspect of the invention detect unplanned travel incidents and subsequently propose accurate, operationally efficient, suitable rebook options to a traveler for the traveler's travel itinerary, thereby assisting a traveler with updating his or her travel itinerary so that the traveler desirably can continue on his or her initial journey with as few disturbances as is feasible, and without the stress of having to manually substitute any impacted booking elements or travel services.

A travel itinerary, in this regard, refers to a collection of travel services booked for a traveler and constituting a trip or journey that the traveler undertakes when traveling between an origin or point of departure and one or more destinations. The travel services may include, but are not limited to travel between locations, e.g., for flights, travel by rail, cruises, ferries, bus travel, automobile travel, etc., as well as other travel-related services such as hotel stays, rental cars, parking, taxis, attraction tickets, and other ancillary travel services. The types of travel-related services that may be incorporated into a travel itinerary are Innumerable, and as such, the invention is not limited to use only with the specific travel services discussed herein.

A travel incident refers to any event that potentially results in an inability of a traveler to utilize at least one of the plurality of travel services in a travel itinerary. It will be appreciated that a travel incident is typically unplanned, and may be related to delays or other problems that are generally outside of the responsibility of any travel provider and/or arguably the responsibility of the traveler, e.g., missed flights or trains due to traffic, illnesses, business meetings that run long, etc. As may be appreciated, some travel incidents may have cascading impacts on a travel itinerary, e.g., where a missed flight may cause a traveler to miss another connecting flight, miss a scheduled car pickup, and miss checking in at a hotel at a destination.

Thus, embodiments consistent with this aspect of the invention may access data related to a traveler and/or the traveler's itinerary and automatically detect a travel incident, identify one or more travel services in the traveler's itinerary that are impacted by the incidents, and automatically propose various alternative travel services to replace any impacted travel services (e.g., propose a package comprising alternative solutions to replace all impacted services), hopefully minimizing any frustration or delays experienced by the traveler due to the need to change their itinerary.

In some embodiments consistent with another aspect of the invention, the proposed alternate travel services may take the form of guaranteed offers that are proposed to a traveler subsequent to a travel incident, and that are guaranteed to the traveler in terms of both availability and price for a limited period of time. In addition, in some embodiments, booking probabilities may be assigned to travel services associated with the guaranteed offers such that an overbooking factor for at least one travel service may be determined based upon the assigned booking probabilities. By doing so, travelers may be provided with a guarantee of price and availability prior to booking, while inventory and/or revenue management for a travel provider may be managed in a more accurate manner.

It will be appreciated that guaranteed offers may be utilized in situations other than in connection with rebooking a travel itinerary after a travel incident. Likewise, in some embodiments alternate travel services that are not associated with guaranteed offers as described herein may be proposed in response to a travel incident. Accordingly, it will be appreciated that these different aspects of the invention may be utilized separately from one another in some embodiments, and the invention is therefore not limited to embodiments that combine both of these features.

Other variations and modifications will be apparent to one of ordinary skill in the art.

### Hardware and Software Environment

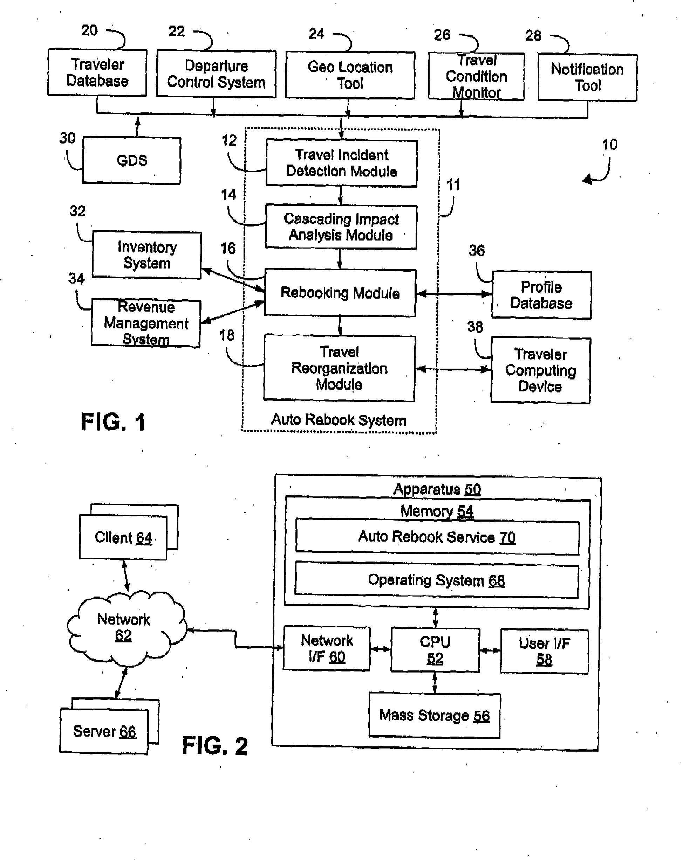

Turning now to the drawings, wherein like numbers denote like parts throughout the several views, Fig. 1 illustrates an example data processing system 10 in which an auto rebook service consistent with the invention may be implemented. System 10 is illustrated as including a central service implemented as auto rebook system 11, which incorporates a number of modules, including a travel incident detection module 12, a cascading impact analysis module 14, a rebooking module 16 and a travel reorganization module 18. In some embodiments, an auto rebook service may be provided as a chargeable service to a traveler or the traveler's employer, thereby potentially providing additional financial benefits for travel agencies and travel providers (e.g., airlines).

Travel incident detection module 12 is configured to collect various information potentially indicative of a travel incident, e.g., from a traveler database 20, departure control system 22, geo location tool 24, travel condition monitor 26, notification tool 28 and/or global distribution system (GDS) 30, and detect travel incidents that may impact one or more travelers. Cascading impact analysis module 14 is configured to analyze potential cascading consequences of a detected travel incident on the other elements of a booking record (also referred to herein as travel services of a travel itinerary). Rebooking module 16 is configured to generate one or more sets of proposed alternate travel services to address the impacted travel services in a travel itinerary, and may interact with an inventory system 32, revenue management system 34 and/or a profile database 36 when generating the proposals. Travel reorganization module 18 interacts with a traveler, e.g., via the traveler's computing device 38 (e.g., a smart phone) to forward the proposals to the traveler, receive instructions from the traveler as to which proposals, if any, to accept, and update the travel itinerary accordingly.

It will be appreciated that modules 12, 14, 16 and/or 18, as well as components 20-38, may be combined in some implementations and may be implemented within the same or In different computer systems, and that functionality in some modules/components may be implemented in other modules/components, or the functionality may be partitioned into separate modules/components. Moreover, modules 12, 14, 16 and/or 18, as well as components 20-36, may be operated and/or managed by the same or different entities, e.g., a travel provider or a third party that supports multiple travel providers.

System 11 may be implemented in a number of manners consistent with the invention. Fig. 2, for example, illustrates an example apparatus 50 within which various steps from an auto rebook operation may be implemented in a manner consistent with the invention. For the purposes of the invention, computer 50 may represent practically any type of computer, computer system or other programmable electronic device. Moreover, computer 50 may be implemented using one or more networked computers, e.g., in a cluster or other distributed computing system, or may be implemented within a single computer or other programmable electronic device, e.g., a desktop computer, laptop computer, handheld computer, cell phone, set top box, etc.

Computer 50 typically includes a central processing unit (CPU) 52 including at least one processing unit, e.g., a microprocessor, coupled to a memory 54, which may represent the random access memory (RAM) devices comprising the main storage of computer 50, as well as any supplemental levels of memory, e.g., cache memories, non-volatile or backup memories (e.g., programmable or flash memories), read-only memories, etc. In addition, memory 54 may be considered to include memory storage physically located elsewhere in computer 50, e.g., any cache memory in a processor in CPU 52, as well as any storage capacity used as a virtual memory, e.g., as stored on a mass storage device 56 or on another computer coupled to computer 50. Computer 50 also typically receives a number of inputs and outputs for communicating information externally. For interface with a user or operator, computer 50 typically includes a user interface 58 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 50 may also include one or more mass storage devices 56, e.g., a floppy or other removable disk drive, a hard disk drive, a direct access storage device (DASD), an optical drive (e.g., a CD drive, a DVD drive, etc.), and/or a tape drive, among others. Furthermore, computer 50 may include an interface 60 with one or more networks 62 (e.g., a LAN, a WAN, a wireless network, and/or the internet, among others) to permit the communication of information with other computers and electronic devices, e.g., one or more client computers 64 (e.g., for interfacing with travelers) and one or more servers 66 (e.g., implementing any of the systems and components discussed herein). It should be appreciated that computer 50 typically includes suitable analog and/or digital interfaces between CPU 52 and each of components 54, 56, 58 and 60 as is well known in the art. Other hardware environments are contemplated within the context of the Invention.

Computer 50 operates under the control of an operating system 68 and executes or otherwise relies upon various computer software applications, components, programs, objects, modules, data structures, etc., e.g., an auto rebook service 70. Moreover, various applications, components, programs, objects, modules, etc, may also execute on one or more processors in another computer coupled to computer 50 via network 62, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code," Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further Include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by computer 50. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which It is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

### Auto Rebook Service

Traditionally, when a traveler knows that he or she will miss a flight, or when he or she has already missed a flight in a travel itinerary, the traveler is required to contact a travel agency or an airline to rebook a new flight to the original destination. Additionally, the traveler may need to think about all other booking elements (also referred to herein as travel services) of the itinerary (e.g., hotels, cars, parking, etc.), which may require a time extension, an update or a cancellation, typically depending on the flight date/time change.

In addition, missing one of the elements of an initial itinerary may create cascading impacts on the complete journey. For example, taking the next flight to a destination will typically lead to a later arrival, a car rental office being already closed, or a pre-booked taxi being missed. Even a hotel room reservation may be expired due to extended delay. As such, a traveler may be left on his or her own when attempting to update or cancel all of these impacted elements, which often can be complicated, time consuming, irritating and stressful for the traveler.

Moreover, rebooking may not be a straightforward process in all situations. As noted above, a traveler may encounter difficulties in rebooking new flights, hotels or cars by phone, supplemented by the cost of a long international communication, or special extra charged numbers, and may be far from home, in a country that speaks a different language, and may be incapable of contacting a travel agency or airline in his or her own country.

Embodiments consistent with the invention address these issues by implementing an auto rebook service that combines travel incident detection with the generation of proposals for alternate travel services to replace any travel services in a travel itinerary that are impacted by a detected travel incident. Returning to Fig. 1, these functions may be implemented in some embodiments through the use of a travel incident detection module 12, a cascading impact analysis module 14, a rebooking module 16 and a travel reorganization module 18.

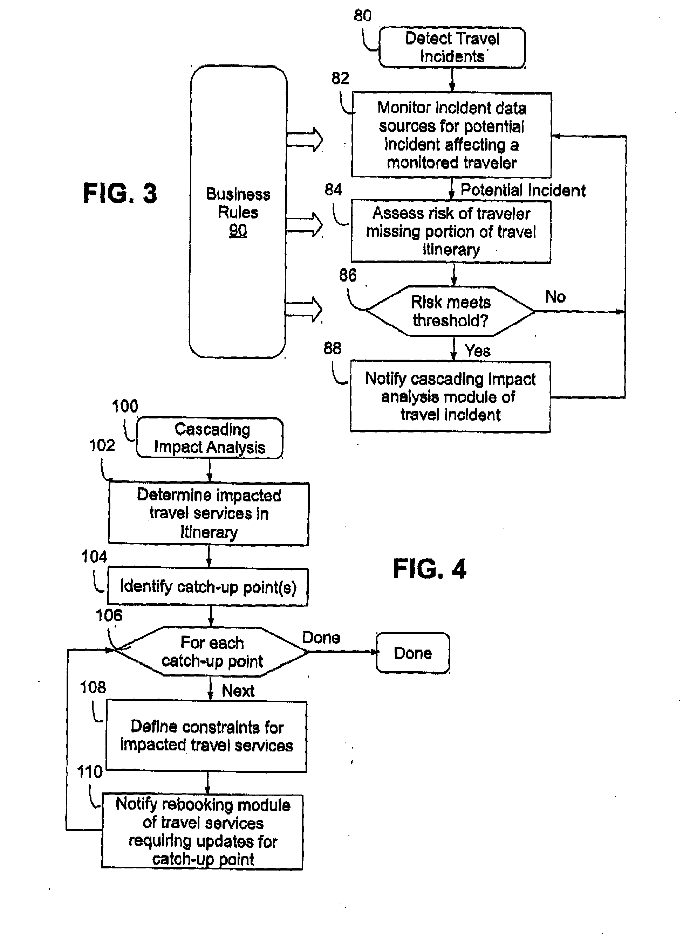

Fig. 3, for example, illustrates one example implementation of a travel incident detection routine 80 capable of being implemented in travel Incident detection module 12. Routine 80 runs in a loop that periodically or continually monitors one or more incident data sources for potential incidents affecting monitored travelers (block 82). A monitored traveler, in this regard, may include a traveler for which the auto rebook service has been enabled (or potentially all travelers), and for which that traveler's journey is currently or soon-to-be underway. In some embodiments, a list of travelers, and links to their itineraries, may be provided to the travel incident detection module by an external system such as a GDS, reservation system, or other source of traveler itinerary data.

As shown by components 20-30 of Fig. 1, a number of different incident data sources may be used. For example, incident data may include traveler data obtained from a traveler database 20, e.g., as implemented in a computer reservation system, and as stored in the form of Passenger Name Records (PNR's) or Customer and Product Records (CPR's). The traveler data may include initial reservation or itinerary details, including flights, hotels, car rentals, or any other travel services that may be associated with a travel itinerary, as well as dates and times associated with those services so that any missed or soon-to-be missed services can be identified. In some embodiments, the traveler data may also include an indication of whether the traveler is authorized for travel incident detection, e.g., if the traveler or traveler's employer has subscribed to the service, or if the traveler has paid a one-time fee for the service when booking the itinerary.

Incident data may also include traveler status data, e.g., as obtained from a departure control system (DCS) 22. The traveler status data may include real-time data that indicates whether a traveler has boarded and/or checked-in to a flight, whether the traveler is on standby, whether the flight has departed, when the flight is expected to depart, flight delays, gate changes, etc. As such, travel incidents such as a traveler who has not yet checked in, or a traveler who has not presented himself or herself to boarding before gate closure, may be detected.

Incident data may also include location data, e.g., as obtained from one or more geo location tools 24, which provides a current location for a traveler. The geo location tool may be integrated into a traveler's smart phone or other portable computing device, or may be separate therefrom.

In addition, incident data may include travel condition data, e.g., as obtained from a travel condition monitor 26. For example, real time travel condition data such as traffic conditions, airport car parking filling rates, weather conditions, real-time police/custom/security/check-in status or estimated wait time, boarding gate walking distances, etc. may be used, e.g., to determine the likelihood of a traveler being able to board a flight based on the traveler's current location, or otherwise data associated with an amount of time required for the traveler to complete the boarding process. This information may be obtained, for example, from airport data processing systems, police/custom/security data processing systems, weather services, and other systems that would be apparent to one of ordinary skill in the art having the benefit of the instant disclosure.

incident data may also include notifications received directly from travelers, e.g., via a notification tool 28. The notification tool, for example, may collect traveler notifications from mobile apps, SMS or text messages, phone calls, emails, mobile or desktop web sites, notifications passed through travel provider data processing systems, or in any other manner in which a traveler could indicate that the traveler has missed or will likely miss a flight or other travel service associated with a travel itinerary. Thus, for example, a traveler completely stuck in a traffic jam may generate a notification via his or her mobile phone app that he or she will surely miss the traveler's flight, the receipt of which may cause a travel incident to be declared.

Other information may be collected for the purposes of incident detection, including any data managed by a GDS 30, as well as data obtained from other travel-related systems, e.g., hotel systems, mass transit systems, rail systems, or any other data processing systems where travel services may be tracked. In addition, information and/or functionality such as disclosed in U.S. S/N 13/440,413, filed by Tumayan et al. on April 5, 2012 and entitled "TRAVELER HURRY STATUS MONITOR," and assigned to the same assignee as the present application, which is incorporated by reference herein in its entirety, may also be used.

Returning to Fig. 3, upon detection of a potential incident, control passes from block 82 to block 84 to assess the risk of the traveler missing a portion of the traveler's itinerary, and then to block 86 to determine whether the risk meets a threshold that indicates that a travel incident should be declared for that traveler. If not, control returns to block 82 to continue to monitor for potential incidents. If so, however, control passes to block 88 to declare the travel incident and notify cascading impact analysis module 14 of the travel incident, and then return to block 82 to monitor for other Incidents.

In the illustrated embodiment, each of blocks 82, 84 and 86 may utilize one or more business rules 90 that govern the logic of when to declare a travel incident based upon the incident data collected for a given traveler. It will be appreciated that other forms of logic, e.g., expert systems, fuzzy logic, neural networks, or other data analysis logic, may be used to declare travel Incidents based upon incident data.

With business rules, for example, one rule may be based simply on the fact that a flight has departed and the traveler did not board the flight. Such a rule, for example, would have a high probability or risk of a travel incident. Other business rules, however, may incorporate more data points and be based on relatively lower probabilities. For example, where a departure control system reports that a traveler has not yet checked-in, the flight departure is still scheduled on time in 60 minutes, the location of the traveler, reported by the GPS of the traveler's smart phone, indicates that the traveler is still 40km from the airport, the traffic conditions between the traveler's location and the airport are reported as being moderate and the security queues are reported as being light, a moderate probability may exist that a travel incident will be declared. Various types of incident data may constitute travel incident factors, and probabilities or risks associated with these factors may be summed together in some embodiments and compared against a threshold such that, while no single incident data point is sufficient to trigger a travel incident, a combination of data points may be sufficient to indicate that a substantial likelihood exists that a travel incident will occur.

Thus, once a travel incident is detected, cascading impact analysis module 14 (Fig. 1) is notified. Fig. 4, for example, illustrates a cascading impact analysis routine 100 that may be executed by module 14. Routine 100 analyzes potential cascading consequences of a declared travel incident on the other elements of a booking record (e.g., a PNR). These elements are also referred to herein as travel services of a travel itinerary, as it will be appreciated that all of the services associated with a traveler's itinerary may not necessarily be stored in the same PNR or data record, or even with in the same data processing system. In some embodiments, for example, different databases may be accessed to obtain various travel services that are associated with a given traveler's current journey.

Routine 100 begins in block 102 by determining the impacted travel services in the itinerary. It will be appreciated that missing an initially booked travel service such as a flight may have several cascading impacts on the complete itinerary: the connected flights may be missed, the hotel booking may be expired, the car rental office may be closed, etc. Therefore, by accessing the various travel services in an itinerary, those services that are impacted, need an extension, update or cancellation may be identified so that rebooking logic may be applied to attempt to rebook or otherwise reschedule travel services to minimize the impact on the traveler's journey. Other travel services may already be consumed, while still others may be far enough in the future that they are not yet impacted by a travel incident.

As on example, if only a return flight from Frankfurt to Nice is missed, only that remaining FRA-NCE segment may be impacted. On the other hand, for a traveler missing a NCE-PAR leg of a Nice/Singapore destination booking, then only that leg, or potentially the entire itinerary, may be impacted, and if an overnight stay is required a hotel reservation may also be impacted as well. As another example, a business traveler, who misses a return flight from Paris to Marseilles departing at 3:00 pm, may only be minimally impacted if another flight is available at 4:00 pm. On the other hand, if that traveler misses the last flight of the day, that traveler may need to take the early flight on the following day, and may require additional travel services such as a hotel reservation and a car rental extension.

Once impacted travel services are determined, control then passes to block 104 to identify one or more catch-up points. A catch-up point is a point in an itinerary where it is possible to "catch-up" or rejoin a previously-booked itinerary, while desirably minimizing the impact on the remaining travel services of the overall itinerary. Thus, if the first leg of a three leg flight reservation to a destination is missed, one suitable catch-up point may be the departure of the second leg, while another catch-up point may be the departure of the third leg, and yet another catch-up point may be the arrival at the ultimate destination. Rebooking a connecting flight that arrives at the same airport in enough time to catch the previously-booked second leg would have the lowest impact on the overall itinerary, while rebooking to arrive in time to catch the third leg would have a greater impact, and rebooking to arrive at the destination using a completely different set of flights would have the greatest impact among the three potential catch-up points.

Next, block 106 loops for each catch-up point, and executes blocks 108 and 110 for each such point. Block 108 defines constraints for any impacted travel services, including flights, as well as any hotels, cars, etc. For example, the constraints may require that a replacement flight arrive at the same airport as the missed flight, or that the replacement flight arrive early enough to avoid the need for a hotel stay. Block 110 then notifies rebooking module 16 (Fig. 1) of which travel services in the itinerary are impacted and require updates, including any defined constraints for those travel services.

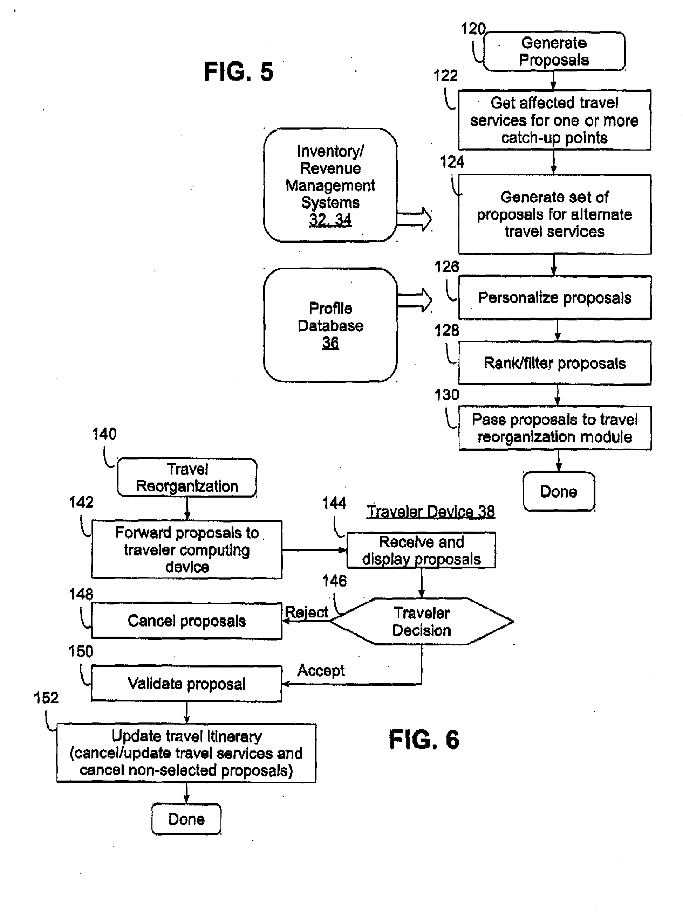

Turning to Fig. 5, this figure illustrates a generate proposals routine 120 that may be executed by rebooking module 16 in response to notification by cascading impact analysis module 14 for one or more catch-up points. In some embodiments, routine 120 may be executed for each catch-up point, or alternatively, as illustrated in block 122, routine 120 may process multiple catch-up points collectively when generating a set of proposals for the traveler.

In either instance, block 122 obtains the travel services in the itinerary that are impacted by the travel Incident and thus require updating in the form, for example, of cancellation, extension, replacement, or modification, as appropriate. Block 124 then generates a set of proposals for alternate travel services. Each proposal in the set of proposals may include a collection of one or more alternate travel services that, if accepted by the traveler, update the travel itinerary to minimize the impact of the travel incident. The alternate travel services may include additional travel services that are new to an itinerary, as well as travel services that replace other travel services that will be canceled. In addition, some travel services that are impacted in the original itinerary may be canceled without being replaced in a proposal. Thus, for example, if a missed leg of a flight that connects in Paris leads to a proposal to replace the missed leg with a flight that connects instead through Brussels, the proposal would not only replace the missed flight with the new flight, but may also add a hotel reservation for any layover in Brussels, cancel a hotel reservation for any layover In Paris, or adjust other services such as car rentals, taxi's etc. as may be needed to accommodate the traveler's changed situation.

The generation of proposals in block 124 may incorporate accesses to both an inventory system 32 and a revenue management system 34, as well as other travel-based systems, including a GDS, a hotel reservation system, a car rental reservation system, or any other travel-based system from which travel services may be searched, accessed, booked, reserved, or even provisionally reserved to select a collection of one or more travel services that will minimize the impacts of a travel incident. Monetary information may also be considered to minimize the cost of any changes (e.g., cancelation penalties and costs of new services), and a traveler may be provided with different proposals that focus on different priorities, e.g., with one proposal being the least expensive option, another proposal being the shortest duration option, and another proposal being the most popular option based on other travelers' selections (although it will be appreciated that different numbers of proposals, as well as different combinations of proposal types, may be used in other embodiments). In addition, the defined constraints generated by the cascading impact analysis module are considered when generating proposals so that travel services are selected that are operationally efficient, and that, for example, have less duration, less connection time, and less disruption to the overall travel Itinerary.

Block 124 may utilize business rules, or other analysis methodologies mentioned above, to select travel services for each proposal. In addition, as illustrated in block 126, once proposals are generated, additional personalization may be performed, using a profile database that stores, for example, traveler and/or company (employer) preferences, thereby enabling more accurate proposals to be generated for a particular traveler. A profile database may store information such as whether the traveler's employer requires or prefers a certain booking class or cabin, what types or brands of hotels, car rentals, flights (direct, or with connections), etc. the traveler has preferred in the past, recommendations from personalized content engines, or any other information collected or stored about a traveler and/or his or her employer that may be used to increase the likelihood that that traveler will find a proposal to be acceptable for updating that traveler's itinerary.

Next, in block 128, the proposals are ranked and/or filtered to select one or more proposals to be submitted to the traveler for review and consideration. In some instances, it may be desirable to propose different categories of proposals, e.g., least expensive, shortest duration and most popular, or to submit multiple proposals from each category, with the option to view additional proposals if desired. It will be appreciated that travel web sites, for example, often provide travelers with numerous searching and filtering options to enable travelers to find travel services that best meet their needs, and that any of such functionality may be incorporated into the embodiments consistent with the invention to provide additional customization options to a traveler as may be desired, although in many embodiments it may be desirable to limit the choices provided to a traveler in order to minimize the amount of effort required by the traveler in what is often a stressful and rushed situation when the traveler has missed or is about to miss a flight.

Once the proposals are ranked and/filtered, block 130 passes these proposals to travel reorganization module 18 (Fig. 1) to assist the traveler from the transfer of selected proposals until the re-actualization of the traveler's itinerary with updated travel services. Module 18 may execute a routine such as travel reorganization routine 140 of Fig. 6, which begins in block 142 by forwarding the generated proposals to a computing device, e.g., a smart phone, of the traveler. The proposals may be sent to a mobile app executing on the device, or alternatively, sent via a text message, an email, or other form of electronic communication, and optionally with a link to a mobile or desktop web site from which the proposals may be viewed and acted upon. Once received by the traveler computing device (e.g,, computing device 38 of Fig. 1), the device displays the proposals, e.g., in a mobile app, an email app, a browser app, etc., and awaits in block 146 a decision from the traveler. If, for example, the traveler chooses to reject all proposals, block 146 returns the rejection to module 18, resulting in a cancelation of all proposals in block 148. If, however, the traveler chooses one of the proposals, block 146 returns the acceptance to module 18, which validates the accepted proposal in block 150, and then updates the travel itinerary for the traveler in block 152. At this time, travel services in the itinerary are canceled, modified, updated, added, etc. as necessary to update the itinerary, and any non-selected proposals are canceled.

Validation in block 150 may incorporate consideration of any proposal time constraints, as proposals may expire after some time period, and travel services, e.g., flights, may no longer have availability once accepted by the traveler. Block 150 may therefore perform price and availability checks in order to update the proposal If circumstances have changed between when the proposal was generated and accepted. In addition, by validating a proposal, the traveler will generally also officially accept any additional fees consequent to a selected proposal.

Block 152 generally handles itinerary actualization, so that once a proposal is validated, the block handles the often complicated and time consuming operations of updating the itinerary, cancelling the elements of an initial travel record, reissuing flight tickets, rebooking taxis, rebooking car parks, etc., desirably with minimal involvement from the traveler, as well as in some circumstances enabling the traveler to avoid having to go to an airline ticketing desk to update the itinerary. In addition, in some embodiments, check-ins may be handled automatically so that a traveler can also avoid having to go to a check-in desk prior to boarding the flight.

It will be appreciated that in some embodiments, selection of a proposal may lead to the cancellation of initially booked elements in an itinerary. A traveler who misses the first leg of a Nice-Paris/Paris-New York flight, and who validates a new flight proposal with a connection in Frankfurt, may have an initial reservation for a hotel in Paris Charles de Gaulle Airport automatically canceled in connection with updating the itinerary.

In some embodiments, each generated proposal may be configured as an offer, which is a collection of one or more travel services along with an availability and quotation, made to a traveler prior to booking, and with no guarantee of price and availability. Such an offer may be considered as a snapshot of the proposal at a given moment. In such an instance, when the traveler selects an offer, an availability/price check may be performed to update the offer information accordingly.

However, in other embodiments, proposals may be configured as guaranteed offers, which is a collection of one or more travel services along with an availability and quotation, made to a traveler prior to booking, and with a guarantee of price and availability for a limited time frame.

Thus, for example, a seat in a flight, taking off at 20:00 PM, may be guaranteed (for price and availability) until 17:30 PM. In addition, this time frame, during which the proposal is guaranteed or protected, may be used as an input for a revenue management system, thereby enabling the proposal to be considered for overbooking calculations as well as when pricing other seats on the flight, as discussed in greater detail below.

In general, availability and price guaranteed proposals are linked to one another and all protected during a fixed period such that accepting one proposal automatically cancels all others, releasing the associated services for purchase. In addition, a lack of traveler response within the limited time frame will cancel all guaranteed proposals. In some embodiments, for expired proposals, a traveler may be permitted to ask for an availability and price update, e.g., via a mobile app, enabling the traveler to select a proposal using the updated availability and price information.

As a further Illustration of the operation of the invention, consider an example scenario where Mr. Lee is a frequent business traveler, based in Nice, France, and his company has subscribed to an auto rebook service consistent with the invention. Mr. Lee is scheduled for a round trip between Nice and Singapore, with an outgoing flight from NCE to CDG scheduled on a Monday at 19:15, arriving at 20:45, and a flight from CDG to SIN at 23:15, arriving the next day at 18:00. Mr. Lee is scheduled for two days of workshops, with a return scheduled for Thursday at 20:00 on a flight from SIN to CDG, arriving at 3:15 on Friday, and a flight from CDG to NCE at 12:30. Mr. Lee also has a hotel room booked for Friday at CDG airport for rest over his layover. Mr. Lee also has a strong constraint and must absolutely be back in Nice on Friday even if he arrives later than his initial schedule, at it is his daughter's birthday.

At 18:30 on Thursday, Mr. Lee is in the middle of a presentation, yet Mr. Lee glances at his watch and realizes that it will be difficult to catch his return flight at 20:00. He begins to panic thinking that he will not be able to contact his travel agency as it is bank holiday in France. Remembering, however, that he benefits from an auto rebook service subscription, he remains calm, and can return to his presentation without interruption.

Travel incident detection as disclosed herein may detect that based upon Mr. Lee's current location, the state of traffic between his location and the airport, the state of Mr. Lee's rental car as having not been returned, the required flight check-in closure at 19:00 and the state of Mr. Lee having not yet checked-in from the departure control system, a high risk exists for a travel incident affecting the flight from SIN to CDG, thereby triggering an analysis of cascading impacts.

Upon evaluating cascading impacts, itinerary checks are performed to discern operationally efficient flights meeting Mr. Lee's constraints. In this case, catch-up points may be identified as CDG and NCE.

Since the connecting flight from CDG to NCE leaves at 12:30 on Friday, a constraint may be defined for the CDG catch-up point requiring arrival in CDG by 11:00. Upon searching for flights to CDG or neighboring airports, it may be determined that It is not possible to replace only the SIN-CDG flight, as the initially booked flight of Mr. Lee was the last one of the day, and the last to arrive by 11:00 the following day.

Consequently, the next catch-up point (NCE) may be analyzed, and other flights to replace flights between Singapore to Nice, as well as an adequate hotel in any connecting city, may be identified.

Availability/price checks may also be performed and traveler/company preferences/policies, as well as traveler past experiences may be taken into account to propose efficient and accurate flights to Mr. Lee. In this example, Mr. Lee's company policy pushes to business class when a flight takes more than 5 hours, and preferentially to sky team alliance flights. Thus, in the proposal selection sky team flights in business class will be prioritized. In addition, Mr. Lee's company has subscribed to guaranteed offers, so the generated proposals are guaranteed, and protected within a time limit. In this case, three example proposals may be sent to Mr. Lee's portable computing device for review and approval:

### Offer 1 (least expensive):

20:55 Thu - 03:00 Fri, Singapore-London QF3345
12:50 Fri -15:45 Fri London-Nice, BA342
Hotel: Heathrow Hotel, 1 night.
Total: 760 EUR

### Offer 2 (shortest duration)

21:00 Thu - 00:10 Fri, Singapore-Dubai, EK405
09:25 Fri- 14:15 Fri, Dubai-Nice, EK77
Hotel: Dubai Hotel, 1 night
Total: 890 EUR

### Offer 3 (most popular)

21:55 Thu-04:40 Thu, Singapore-Amsterdam, KL836
15:35 Thu- 17:40 Thu, Amsterdam-Nice, KL1263
Hotel: Amsterdam Hotel, 1 night
Total: 790 EUR

When Mr. Lee finishes his presentation, it is 19:15, but he is reassured to see that he received suitable flight and hotel rebook proposals on his mobile phone. He selects Offer 3 that connects through Amsterdam late in the night and includes a flight to Nice the next morning. Following his validation, all the necessary modifications in his PNR are automatically handled, canceling the original flights and hotel and rebooking on the new flights and making a new hotel reservation in Amsterdam. Mr. Lee didn't have to worry about all these adjustments of his travel; he didn't have to undertake difficult efforts to contact his travel agency, especially during a non-working-day. In addition, since he does not speak French, it would have been difficult for him to try to rebook by phone with his travel agency. He can relax knowing that he has plenty of time to reach the airport in time for his later flight, and will still have time to rest in Amsterdam before connecting to Nice.

### Guaranteed Offers

As noted above, in some embodiments of the invention, it may be desirable for proposals of alternate travel services to be implemented as guaranteed offers in which availability and price are guaranteed for a limited time frame. Traditional offers are not guaranteed, and may change at the time a traveler confirms a proposed booking to a travel agent. It has been found that some travel agents may address this situation by booking several real and guaranteed PNR's (or even sometimes several itineraries in a same PNR); however, this is generally considered fraudulent in the travel industry since the bookings affect pricing and availability determinations for travel services that are known by the agent to likely be canceled.

In some embodiments of the invention, however, offers may be made guaranteed for a limited time frame, and may be used to impact inventory and revenue management principles based upon a probability of booking. Guaranteed offers, in some embodiments, may be a chargeable service to a traveler or to a traveler's company, and may be purchased on an individual basis or on a subscription basis. In addition, the service may be free of charge in some instances.

In some embodiments, multiple offers for the same journey between an origin and a destination may be linked together into a set such that the probabilities of the entire set may be used as input to an inventory and/or revenue management system and thereby affect both the availability and pricing of travel services by other potential travelers. As is known in the art, travel services are often overbooked to maximize return on investment based upon the risk of last minute cancelations. Inventory and revenue management systems commonly price travel services and report availability of travel services based upon algorithms that factor in the risks of cancelations and the often volatile demand for those travel services.

Embodiments consistent with the invention therefore assign probabilities to the travel services associated with each guaranteed offer among a set of guaranteed offers, and utilize the assigned probabilities as inputs to inventory and/or revenue management systems such that price and availability determinations may take into the account of confirming bookings of the travel services associated with the guaranteed offers. The probabilities may be based, for example, on the count of guaranteed offers In the set, such that if there are N guaranteed offers, the probability of each travel service in each guaranteed offer may be assigned to be 1/N, with the probabilities for any travel services that are common to multiple guaranteed offers summed together based upon the number of guaranteed offers sharing the same travel service. Thus, for example, if there are N guaranteed offers, and a particular travel service is shared by M of those guaranteed offers, the probability for that travel service may be M/N.

In addition, given that the guaranteed offers are associated with the same journey between an origin and destination, the offers are grouped together for probability calculations, and when one guaranteed offer is confirmed, the other guaranteed offers In the set may be automatically cancelled, with the inventory and/or revenue management systems updated to reflect both the confirmed offer and the other canceled offers. In addition, when the limited time frame for a guaranteed offer expires, the inventory and/or revenue management systems may also be updated to reflect the cancelation of all offers.

As an example, a traveler may wish to travel from Nice to New York in two weeks, and may be presented with three options, with a requirement to confirm within 1 day:

| Option 1 (4000 EUR) | |
|---|---|
| AF123 Nice to Paris | probability of booking: 1/3 |
| AF456 Paris to New York | probability of booking: 2/3 (segment is same for options 1 and 2) |

| Option 2 "(4100 EUR) | |
|---|---|
| AF798 Nice to Paris | probability of booking: 1/3 |
| AF456 Paris to New York | probability of booking: 2/3 (segment is same for options 1 and 2) |

| Option 3 (6200 EUR) | |
|---|---|
| BA123 Nice to London | probability of booking: 1/3 |
| BA456 London to New York | probability of booking: 1/3 |

Notably, since one segment is common to options 1 and 2, the overall probability is 2/3, rather than 1/3 as in the case of the other alternate services.

By incorporating the probabilities into inventory and revenue management calculations, more accurate pricing and availability decisions may be made, with the probabilities of booking for each flight segment used in lieu of traditional assumptions that all bookings have a 100% probability.

In addition, from the perspective of overbooking, for example, if only one seat is available on a flight, an inventory system may take the risk to accept one guaranteed offer with a probability of confirmation of 50% and 2 other guaranteed offers with a probability of confirmation of 25%, resulting in potentially 4 bookings confirmed on the flight instead of 1. A risk exists to have all offers confirmed and have 3 overbooked travelers, but the risk of overbooking may be correlated with revenue management by setting an appropriately high price for last minute travelers to pay and the possibility to offload other travelers who bring a lower financial contribution to the flight.

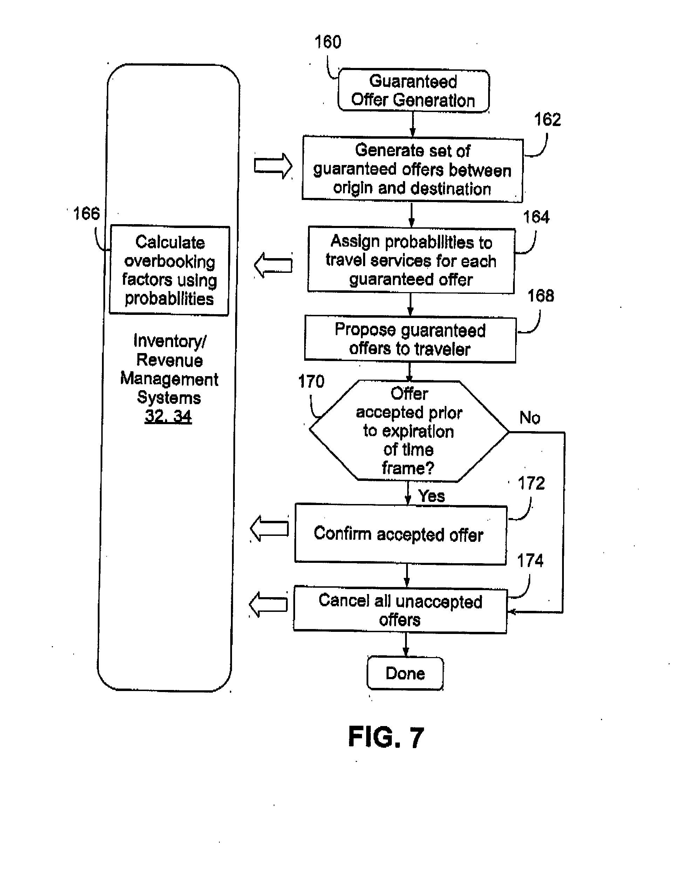

Fig. 7, for example, illustrates a guaranteed offer generation routine 160 that may be executed to generate a set of one or more guaranteed offers for alternate travel itineraries for a journey between and origin and destination. Also illustrated are inventory and revenue management systems 32, 34, which may be accessed and updated in association with generating the guaranteed offers.

Each itinerary may include one or more travel services as noted above, and routine 160 begins in block 162 by generating the set of guaranteed offers meeting the desired parameters of a journey between an origin and a destination. The guaranteed offers may be generated in the manner disclosed above for proposals responsive to a detected travel incident, or may be generated in alternate manners and under alternate circumstances, e.g., whenever a traveler desires to purchase travel services associated with an upcoming journey.

Once the set of guaranteed offers is generated, probabilities are assigned to the travel services for each guaranteed offer in block 164. As noted above, in some embodiments the probabilities may be based in part on a count of guaranteed offers in a set.

As a result of assigning the probabilities, the inventory and/or revenue management systems 32, 34 may be updated, such that pricing and/or availability determinations may be made based upon an assumption that each of the travel services in each guaranteed offer is booked with the probability assigned thereto. One of the operations affected by such probabilities is the calculation of overbooking factors in block 166, and it will be appreciated that the incorporation of the probabilities assigned to provisionally booked travel services associated with guaranteed offers would be well within the abilities of one of ordinary skill in the art having the benefit of the instant disclosure.

In one embodiment, for example, an overbooking calculation may be based on aircraft capacity plus overbooking allowance minus the sum of each booking probability. In such an embodiment, if an aircraft has a capacity of 100 passengers and an overbooking allowance of 10, and there were already 109 regular bookings (probability of 1) made, the availability would be 1, and each of the following bookings could be accepted:
- 1 guaranteed offer with a probability of 0.5 and 2 with a probability of 0.25, resulting in 112 passengers booked or guaranteed on this flight and no more availability.
- 1 regular booking, resulting in 110 passengers booked and no more availability.
- 2 guaranteed offers with a probability of 1/3, resulting in 111 passengers booked and an availability of 1/3.

Once probabilities are assigned and used to update the inventory and/or revenue management systems, control passes to block 168 to propose the guaranteed offers to the traveler, e.g., via a web site, mobile app, email, or other form of electronic communication. Alternatively, guaranteed offers may be proposed to a traveler using a travel agent or travel provider agent (e.g., an airline ticketing agent), either In person or over the phone. Guaranteed offers generally include the travel services associated with an itinerary along with a price or cost to be incurred upon acceptance of the guaranteed offer. In addition, guaranteed offers are generally associated with a limited time frame (e.g., for the next X minutes, hours or days, or until a specific time and/or date), so as illustrated in block 170, a traveler is required to accept one of the offers within the limited time frame.

If one of the offers is accepted, control passes to block 172 to confirm the accepted offer, and then to block 174 to cancel the other guaranteed offers in the set. In association with confirming the offer and canceling the other offers, the inventory and/or revenue management systems are updated to reflect the changes (e.g., to update the travel services for the accepted offer to 100% booked and to cancel the travel services for the unaccepted offers). Returning to block 170, however, if the traveler rejects all of the offers, or does not accept an offer within the limited time frame, control passes directly to block 174 to cancel all outstanding guaranteed offers In the set, and thereby updating the inventory and/or revenue management systems to reflect the cancelation of all travel services associated with the set of guaranteed offers.

It will be appreciated that some of the features of the example embodiments of this invention may be used without the corresponding use of other features. Further, while the embodiments discussed above are in some aspects focused on air travel, it will be appreciated that some embodiments may focus on other forms of travel, including but not limited to travel via rail, road or sea, or other services associated with travel In general. In addition, various additional modifications may be made without departing from the spirit and scope of the invention. Therefore, the invention lies in the claims hereinafter appended.

## Claims

1. A method of generating guaranteed offers, the method comprising:
generating a set of guaranteed offers for a requested journey between an origin and a destination using at least one processing unit, wherein each guaranteed offer includes a travel itinerary and guarantees availability and price for the travel itinerary for a limited period of time;
assigning booking probabilities to travel services associated with the set of guaranteed offers; and
determining an overbooking factor for at least one travel service associated with at least one of the plurality of guaranteed offers based upon the assigned booking probabilities.

2. The method of claim 1, further comprising automatically canceling the other guaranteed offers in the set of guaranteed offers
- in response to confirmation of a first guaranteed offer among the set of guaranteed offers or
- in response to a failure to confirm any of the guaranteed offers in the set of guaranteed offers within a limited period of time for which each guaranteed offer in the set of guaranteed offers is guaranteed.

3. The method of claim 1 or claim 2, further comprising managing inventory and/or revenue for the travel services associated with the set of guaranteed offers using the determined overbooking factor.

4. The method of any of the preceding claims, wherein generating the set of guaranteed offers is performed in response to detection of a travel incident that affects a travel itinerary for a traveler, and wherein the set of guaranteed offers identify alternate travel services to at least one impacted travel service in the impacted travel itinerary for the traveler.

5. The method of any of claims 1 to 3, wherein assigning the booking probabilities includes assigning the booking probabilities for a plurality of alternate travel services that are alternate to one another based upon a count of the guaranteed offers in the set of guaranteed offers.

6. A method of generating guaranteed offers, the method comprising:
generating a guaranteed offer for a requested journey between an origin and a destination using at least one processing unit, wherein the guaranteed offer includes a travel itinerary and guarantees availability and price for the travel itinerary for a limited period of time;
assigning booking probabilities to travel services associated with the guaranteed offer; and
determining an overbooking factor for at least one travel service associated with the guaranteed offer based upon the assigned booking probabilities.

7. An apparatus, comprising:
at least one processing unit; and
program code configured upon execution by the at least one processing unit to generate guaranteed offers by:
generating a set of guaranteed offers for a requested journey between an origin and a destination using at least one processing unit, wherein each guaranteed offer includes a travel itinerary and guarantees availability and price for the travel itinerary for a limited period of time;
assigning booking probabilities to travel services associated with the set of guaranteed offers; and
determining an overbooking factor for at least one travel service associated with at least one of the plurality of guaranteed offers based upon the assigned booking probabilities.

8. The apparatus of claim 7, wherein the program code is configured to automatically cancel the other guaranteed offers in the set of guaranteed offers
- in response to confirmation of a first guaranteed offer among the set of guaranteed offers or
- in response to a failure to confirm any of the guaranteed offers in the set of guaranteed offers within a limited period of time for which each guaranteed offer in the set of guaranteed offers is guaranteed.

9. The apparatus of claim 7 or claim 8, wherein the program code is further configured to manage inventory and/or revenue for the travel services associated with the set of guaranteed offers using the determined overbooking factor.

10. The apparatus of any of claims 7 to 9, wherein the program code is configured to generate the set of guaranteed offers in response to detection of a travel incident that affects a travel itinerary for a traveler, and wherein the set of guaranteed offers identify alternate travel services to at least one impacted travel service in the impacted travel itinerary for the traveler.

11. The apparatus of any of claims 7 to 9, wherein the program code is configured to assign the booking probabilities by assigning the booking probabilities for a plurality of alternate travel services that are alternate to one another based upon a count of the guaranteed offers in the set of guaranteed offers.

12. A program product, comprising:
a computer readable medium; and
program code stored on the computer readable medium and configured upon execution by at least one processing unit to generate guaranteed offers by:
generating a set of guaranteed offers for a requested journey between an origin and a destination using at least one processing unit, wherein each guaranteed offer includes a travel itinerary and guarantees availability and price for the travel itinerary for a limited period of time;
assigning booking probabilities to travel services associated with the set of guaranteed offers; and
determining an overbooking factor for at least one travel service associated with at least one of the plurality of guaranteed offers based upon the assigned booking probabilities.

13. The program product of claim 12, wherein the program code is configured to automatically cancel the other guaranteed offers in the set of guaranteed offers
- in response to confirmation of a first guaranteed offer among the set of guaranteed offers or
- in response to a failure to confirm any of the guaranteed offers in the set of guaranteed offers within a limited period of time for which each guaranteed offer In the set of guaranteed offers is guaranteed.

14. The program product of claim 12 or claim 13, wherein the program code is further configured to manage inventory and/or revenue for the travel services associated with the set of guaranteed offers using the determined overbooking factor.

15. The program product of any of claims 12 to 14, wherein the program code is configured to generate the set of guaranteed offers in response to detection of a travel incident that affects a travel itinerary for a traveler, and wherein the set of guaranteed offers identify alternate travel services to at least one impacted travel service in the impacted travel itinerary for the traveler.
